# EUROPÄISCHE PATENTSCHRIFT

(11) **EP 3 204 660 B1**
(45) Veröffentlichungstag und Bekanntmachung des Hinweises auf die Patenterteilung: **06.10.2021**
(21) Anmeldenummer: 15750691.6
(22) Anmeldetag: 10.08.2015
(51) Int. Cl.: F16D 55/225, B60T 13/58, B60T 13/74, F16D 121/04, F16D 121/24, F16D 125/40

(54) **BREMSVORRICHTUNG FÜR EIN KRAFTFAHRZEUG UND VERFAHREN ZUR ANSTEUERUNG DER BREMSVORRICHTUNG BEI EINER ÜBERLAGERUNG VERSCHIEDENER KRAFTKOMPONENTEN**
BRAKING MECHANISM FOR A MOTOR VEHICLE, AND METHOD FOR CONTROLLING THE BRAKING MECHANISM WHEN DIFFERENT FORCE COMPONENTS ARE COMBINED
DISPOSITIF DE FREINAGE POUR UN VÉHICULE AUTOMOBILE ET PROCÉDÉ DE COMMANDE DU DISPOSITIF DE FREINAGE AVEC SUPERPOSITION DE DIFFÉRENTES COMPOSANTES DE FORCE

(30) Priorität: 06.10.2014 DE 102014220167; 04.05.2015 DE 102015208165
(43) Veröffentlichungstag der Anmeldung: 16.08.2017
(73) Patentinhaber: Robert Bosch GmbH, 70442 Stuttgart (DE)
(72) Erfinder: BAEHRLE-MILLER, Frank, 71101 Schoenaich (DE); BLATTERT, Dieter, 74366 Kirchheim/Neckar (DE); WIENKEN, Hubertus, 74243 Langenbrettach (DE)
(86) Internationale Anmeldenummer: PCT/EP2015/068356
(87) Internationale Veröffentlichungsnummer: WO 2016/055193

(56) Entgegenhaltungen:
- DE-A1- 10 345 485
- DE-A1-102009 047 127
- US-A1- 2007 158 148
- US-A1- 2013 175 124

## Beschreibung

Die vorliegende Erfindung bezieht sich auf eine Bremsvorrichtung für ein Kraftfahrzeug und ein Verfahren zur Ansteuerung der Bremsvorrichtung mittels einer Überlagerung verschiedener Kraftkomponenten, wobei die elektromechanischen Kraftkomponente frühestens zeitgleich mit der hydraulischen Kraftkomponente erzeugt wird.

Bekannte automatisierte Feststellbremssysteme, sogenannte APB (automated parking brakes), sind so ausgelegt, dass sie die notwendige Feststellbremskraft in der Regel vollständig mittels eines Feststellbremsaktuators, beispielsweise mittels eines elektromechanischen Aktuators bereitstellen können. Nur in wenigen Ausnahmen, wenn z. B. der Feststellbremsaktuator sehr warm ist und/oder die Spannung gering ist, kann es dazu kommen, dass bspw. eine hydraulische Unterstützung des elektromechanischen Aktuators, (auch elektromechanischer Steller bezeichnet) notwendig wird. Bekannte Feststellbremssysteme können die notwendige Feststellbremskraft nur leisten weil sie auf ein entsprechendes Lastprofil der Aktuierung mittels eines einzigen Feststellbremsaktuators hin ausgelegt sind. Darüber hinaus muss auch der elektrische Pfad für die Feststellbremse eine entsprechende Leistung bereitstellen können.

Aus dem Stand der Technik ist beispielsweise die DE 10 2010 002 825 A1 bekannt. Hierin wird beschrieben, dass bei einem Verfahren zum Einstellen der von einer Feststellbremse ausgeübten Klemmkraft, die von einer elektromotorischen Bremsvorrichtung und bedarfsweise von einer Zusatzbremsvorrichtung aufgebracht wird, während einer Betätigungsphase der elektromotorischen Bremsvorrichtung aus der aktuellen Motorspannung, dem aktuellen Motorstrom und der aktuellen Motordrehzahl der Motorwiderstand und die Motorkonstante bestimmt werden und daraus die über die elektromotorische Bremsvorrichtung erreichbare Klemmkraft ermittelt wird, wobei für den Fall, dass die elektromotorische Klemmkraft eine geforderte Zielklemmkraft nicht erreicht, über die Zusatzbremsvorrichtung eine Zusatzbremskraft erzeugt wird.

Weiterhin ist aus dem Stand der Technik beispielsweise die DE 10 2011 004 786 A1 bekannt. Hierin wird beschrieben, dass bei einem Verfahren zum Einstellen der von einer Feststellbremse ausgeübten Klemmkraft für den Fall, dass nach Abschluss eines Zuspannvorgangs ein das Festsetzen des Fahrzeugs störendes Ereignis eintritt, ein Nachspannvorgang durch Betätigen eines elektrischen Bremsmotors und einer Zusatzbremsvorrichtung durchgeführt wird.

Weiterhin ist aus dem Stand der Technik bspw. die DE 103 45 485 A1 bekannt. Hierin wird beschrieben, eine Bremsvorrichtung mit Betriebs- und Feststellbremsfunktion, umfassend eine hydraulische Druckerzeugungseinrichtung zur hydraulischen Zuspannung der Bremsvorrichtung, eine selbsthemmende, vorzugsweise elektrische Krafterzeugungseinrichtung zur zusätzlichen Zuspannungder Bremsvorrichtung, und ein Zuspannelement, an dem die hydraulische Druckerzeugungseinrichtung und die zusätzliche Krafterzeugungseinrichtung angreifen, wobei im Fall einer Betätigung der Feststellbremsfunktion die zusätzliche Zuspannung nach der hydraulischen Zuspannung wirksam wird, und wobei das Niveau der Zuspannkraft der zusätzlichen Zuspannung größer ist, als das Niveau der Zuspannkraft der hydraulischen Zuspannung.

Weiterhin ist aus dem Stand der Technik bspw. die DE 10 2009 047127 A1 bekannt. Hierin wird beschrieben, ein Verfahren zum Betreiben einer im Superpositionsbetrieb arbeitenden Feststellbremse eines Fahrzeugs, insbesondere Kraftfahrzeugs, wobei die Bremskraft der Feststellbremse mittels zweier unterschiedlicher, krafterzeugender Aktuatoren aufbringbar ist, die sich im Superpositionsbetrieb gegenseitig unterstützen.

Weiterhin ist aus dem Stand der Technik bspw. die US 2013/175124 A1 bekannt. Hierin wird beschrieben, ein Verfahren zum Betreiben einer mechanischen Parkbremse.

Weiterhin ist aus dem Stand der Technik bspw. die US 2007/0158148 A1 bekannt. Hierin wird beschrieben, eine Scheibenbremse mit einem Parkbremsmechanismus, der einen großen Kolbenschub ausüben kann, der für die Betätigung einer Parkbremse erforderlich ist, ohne die Arbeitsweise einer Betriebsbremse nachteilig zu beeinflussen.

Der Erfindung liegt die Aufgabe zu Grunde die bei einer Aktivierung der Feststellbremse benötigte Applikationszeit der Wirkung der Feststellbremse zu verkürzen und dabei eine Auslegung der Komponenten der Feststellbremse zu optimierten.

Diese Aufgabe wird durch die Merkmale der unabhängigen Patentansprüche gelöst. Weiterbildungen der Erfindung sind in den abhängigen Patentansprüchen angegeben.

Hierfür ist ein Verfahren zur Durchführung eines Feststellbremsvorgangs bei einem Kraftfahrzeug mit einer Betriebsbremse und einer Feststellbremse vorgesehen, wobei eine hydraulische Kraftkomponente und eine elektromechanische Kraftkomponente zur Erzielung einer Gesamtklemmkraft für den Feststellbremsvorgang überlagert werden. Erfindungsgemäß ist vorgesehen, dass die Überlagerung der beiden Kraftkomponenten bei jedem Feststellbremsvorgang erfolgt, wobei die elektromechanischen Kraftkomponente frühestens zeitgleich mit der hydraulischen Kraftkomponente erzeugt wird.

Unter einem Feststellbremsvorgang ist jeder Vorgang zu verstehen, welcher ein Fahrzeug feststellt. Insbesondere ist hierbei ein Parkvorgang eines Fahrzeugs zu verstehen, bei welchem der Fahrer das Fahrzeug verlässt. Weiterhin kann sich ein Feststellbremsvorgang auch auf Vorgänge beziehen, welche ein kurzzeitiges Halten eines Fahrzeugs, bspw. bei einem Haltevorgang am Berg, ermöglichen.

Eine Überlagerung erfolgt erfindungsgemäß selbstverständlich bereits bei einem initialen Feststellbremsvorgang ohne anschließenden Nachspannvorgang. Weiterhin ist es nicht notwendig ist, dass weitere Bedingungen erfüllt sind, aus welchen bspw. abgeleitet wird, dass eine einzelne Kraftkomponente nicht ausreichend ist und daher eine weitere Kraftkomponente notwendig ist. Die Überlagerung der Kraftkomponenten wird durch einen Superpositionsbetrieb der Betriebsbremse und der Feststellbremse erzielt. Die beiden Bremsen werden erfindungsgemäß bei jedem Feststellbremsvorgang im Superpositionsbetrieb betrieben. Das heißt, beide Bremsen arbeiten in der Art zusammen, dass die durch sie erzeugten Kraftkomponenten sich gegenseitig ergänzen. Die Kraftkomponenten wirken auf den Bremskolben und darüber auf die Bremsbeläge, welche eine Klemmkraft zwischen den Bremsbelägen und der Bremsscheibe erzeugen. Die sich ergebende Gesamtklemmkraft kann daher als Summe der beiden Kraftkomponenten verstanden werden.

Durch das erfindungsgemäße Verfahren wird insbesondere die Applikationszeit hinsichtlich der Feststellbremswirkung reduziert. Hierunter ist zu verstehen, dass die Feststellbremswirkung innerhalb einer kürzeren Zeit als nur bei der Aktivierung eines Bremssystems bereit gestellt werden kann. Weiterhin können aufgrund der permanenten, d.h. bei jedem Feststellbremsvorgang vorliegenden, Überlagerung der beiden Bremssysteme die beiden Bremssysteme, insbesondere das Feststellbremssystem, entsprechend optimiert ausgelegt werden. Hierdurch reduzieren sich bspw. auch die Dimensionen und das benötigte Bauvolumen. Geringere Dimensionen haben einen positiven Einfluss auf das Gewicht des Systems. Weiterhin können durch eine optimierte Auslegung auch die Kosten des Feststellbremssystems reduziert werden.

In einer vorteilhaften Weiterbildung zeichnet sich das Verfahren dadurch aus, dass eine elektromechanische Kraftkomponente mittels einer automatisierten Feststellbremse und eine elektrohydraulische Kraftkomponente mittels der hydraulischen Betriebsbremse erzeugt wird, wobei die Erzeugung und die Überlagerung der beiden Kraftkomponenten bei jedem Feststellbremsvorgang erfolgt.

Hierunter ist zu verstehen, dass die bei einem regulären Feststellbremsvorgang benötigte oder geforderte Gesamtklemmkraft in allen Anwendungsfällen durch ein Zusammenwirken der hydraulischen Betriebsbremse und der automatisierten Feststellbremse erzeugt wird. Die hydraulische Betriebsbremse und automatisierte Feststellbremse werden dafür in dem bereits beschriebenen Superpositionsbetrieb betrieben. Die erzeugten Kräfte werden dabei als Kraftkomponenten einer Gesamtkraft angesehen und dienen der Erzeugung der gewünschten Gesamtklemmkraft.

Als elektrohydraulische Kraftkomponente ist insbesondere eine Kraftkomponente zu verstehen, welche von elektrifizierten Komponenten der Betriebsbremse, erzeugt wird. Als elektromechanische Kraftkomponente ist insbesondere eine Kraftkomponente zu verstehen, welche von einem elektrischen Aktuator (insbesondere Elektromotor) der automatisierten Feststellbremse erzeugt wird. Eine Überlagerung der Kraftkomponenten ist daher so zu verstehen, dass für die Erzeugung der Feststellbremskraft neben der Betätigung der Feststellbremsanlage auch eine Betätigung der Betriebsbremsanlage erfolgt. Das erfindungsgemäße Feststellbremssystem nutzt die somit erzeugte Kraftkomponente bedarfsgerecht für einen Aufbau einer Feststellbremskraft.

Zunehmend werden Teile der Betriebsbremsanlage elektrifiziert. So z.B. auch die Bremskraftverstärkung (iBooster) oder Systeme mit elektrifizierten Bremskraftverstärkern und elektrische Druckregelsysteme (lBox). Dies ist eine Komponente, die anstatt des Bremskraftverstärkers in das Fahrzeug eingebaut wird. Sie hat die Eigenschaft, dass sie sowohl die Bremskraft verstärken kann (wie aus dem Stand der Technik bekannten Bremskraftverstärker), als auch eine Bremskraft bereitstellen kann, ohne dass der Fahrer das Bremspedal betätigen muss. Der iBooster übernimmt dabei den kompletten Bremsdruckaufbau in dem er elektromechanisch den Bremszylinder entsprechend verschiebt. Mittels der Komponenten der elektrifizierten Betriebsbremse wird ein Bremsdruck unmittelbar in der Fahrzeugbremse bereitgestellt. Beispielsweise kann der iBooster einer elektrifizierten Bremsanlage nun in die Bereitstellung der Feststellbremsfunktion fest integriert werden. Selbstverständlich kann der elektrohydraulische Druckaufbau, d.h. die Erzeugung der elektrohydraulischen Kraftkomponente, auch mittels eines üblichen Aktuators eines ESP-Systems (Elektronisches Stabilitätsprogramm) erfolgen, d.h. mittels einer ESP-Pumpe.

Durch das Verfahren der Überlagerung der elektromechanischen und der elektrohydraulischen Kraftkomponente bei jedem Feststellbremsvorgang ergibt sich nicht nur, wie bereits beschrieben, eine Reduktion der Applikationszeit hinsichtlich der Feststellbremswirkung. Im Vergleich zu bestehenden Feststellbremssystemen kann auch eine Optimierung der Auslegung von Komponenten (Motor, Getriebe) der Feststellbremse (kleiner, leichter und damit auch kostengünstiger) erfolgen. Hierdurch ergibt sich wiederum eine Reduktion der ungefederten Masse am Fahrzeug-Rad. Ebenfalls dient das Konzept einer Verringerung der Einschränkungen in Bezug auf die räumliche Anordnung der elektromechanischen Aktuators am Bremssattel. Hierdurch kann mehr Spielraum in der Gestaltung der Achsaufhängung und des Feder-Dämpfer-Systems erlangt werden. Des Weiteren kann durch die Optimierung der Auslegung der Komponenten auch eine Optimierung der Zuleitungen der Feststellbremse ermöglicht werden. Da eine erfindungsgemäße Feststellbremse weniger Abgabemoment bereitstellen muss, können bspw. auch die Zuleitungen günstiger ausgeführt werden. Die notwendige Leistungsübertragung über die Kabel ist im Vergleich zu bekannten Systemen reduziert. Hierdurch ergibt sich beispielsweise eine Reduzierung des Drahtdurchmessers zwischen Steuergerät und APB-Aktuatoren. Ebenfalls wird ein einfacheres Verlegen der Leitungen ermöglicht, bzw. eine freiere Wahl bzgl. der Kabelführung/Kabelaufhängung. Als weiterer Vorteil ergibt sich eine Vereinfachung der Endstufe im Steuergerät, da die elektrische Leistung, die über die H-Brücke geschalten werden muss, reduziert ist. Hierdurch können bspw. kleinere elektronische Komponenten eingesetzt werden.

In vorteilhafter Weise zeichnet sich das Verfahren dadurch aus, dass der Feststellbremsvorgang wenigstens eine Kraftaufbauphase enthält, wobei im Wesentlichen während der gesamten Kraftaufbauphase die Überlagerung der Kraftkomponente erfolgt.

Hierunter ist zu verstehen, dass der Feststellbremsvorgang mehrere Phasen umfassen kann. Die Kraftaufbauphase wird als die Phase angesehen in welcher die geforderte Klemmkraft aufgebaut wird. Vorteilhaft ist vorgesehen, dass während der gesamten Phase beide Aktuatoren der Bremssysteme eine Kraftkomponente liefern. Durch die Überlagerung mehrere Kraftkomponenten kann vorteilhaft die zu erzeugende Kraft auf beide Komponenten aufgeteilt werden. Eine Überlagerung während der gesamten Kraftaufbauphase ist dabei so zu verstehen, dass die Überlagerung während der gesamten zeitlichen Dauer des Kraftaufbaus im Superpositionsbetrieb erfolgt. Hierdurch kann ein möglichst schneller Aufbau der Gesamtklemmkraft erzielt werden. Weiterhin kann durch eine kontinuierliche Überlagerung eine Ermittlung einer Erreichung der erforderlichen Klemmkraft unterstützt werden.

In einer vorteilhaften Ausgestaltung zeichnet sich das Verfahren dadurch aus, dass bei einer Aktivierung des Feststellbremsvorgangs in einem ersten Schritt die elektrohydraulische Kraftkomponente erzeugt wird.

Unter Erzeugung ist dabei die tatsächliche Erzeugung einer Kraftkomponente, bspw. mittels eines aufgebauten Drucks durch die elektrifizierten Komponenten der hydraulischen Betriebsbremsanlage zu verstehen. Eine Aktivierung des Feststellbremsvorgangs kann erfolgen, sobald eine Feststellbremsanforderung erkannt wird. Eine Feststellbremsanforderung kann bspw. vom Fahrer mittels einer manuellen Betätigung eines Tasters erfolgen. Ebenfalls sind automatisierte Anforderungen der Feststellbremskraft Stand der Technik, bspw. bei einem Halten am Berg. Selbstverständlich kann bei (bzw. nach) einer derartigen Aktivierung des Feststellbremsvorgangs eine Aktivierung der Bremsaktuatoren erfolgen. Hierbei ist vorgesehen den Aktuator der Betriebsbremse anzusteuern um die elektrohydraulische Kraftkomponente zu erzeugen. Dieser Aktuator besitzt eine hohe Dynamik im Druckaufbau und kann dadurch in kurzer Zeit eine erste Kraftkomponente bereitstellen. Diese Kraftkomponente kann bereits nach kurzer Zeit eine erste Klemmkraft für den Feststellbremsvorgang bereitstellen. Dies gilt auch bei Tieftemperaturen, insbesondere wenn zur Druckerzeugung keine Hydraulikflüssigkeit angesaugt werden muss (wie bspw. beim ESP), sondern statt dessen bspw. mittels eines iBoosters der Bremszylinder und damit direkt ein Fluidvolumen verschoben wird.

In einer vorteilhaften Weiterbildung zeichnet sich das Verfahren dadurch aus, dass bei dem Feststellbremsvorgangs ein definierter hydraulischer Druck erzeugt wird.

Ein definierter hydraulischer Druck ist dabei als ein festgelegter Druckwert zu verstehen. Dieser beträgt beispielsweise 40 bar. Die Höhe des Druckwerts korreliert mit einer entstehenden hydraulischen Kraftkomponente. Die Festlegung des Druckwerts ist von der Bremssystemauslegung sowie einer Definition des Feststellbremsvorgangs abhängig. Weiterhin kann vorteilhaft vorgesehen sein, dass für alle Feststellbremssituationen ein gleicher Druckwert gewählt wird, d.h. der Druckwert unabhängig von dem Fahrzeugzustand oder den Umgebungsbedingungen ist, um den Regelungsaufwand gering zu halten. In einer alternativen Ausführung ist vorgesehen die Höhe des Druckwert in Abhängigkeit des Fahrzeugzustandes oder der Umgebungsbedingungen einzustellen um ggf. in spezifischen Situationen eine maximale Druckunterstützung zu ermöglichen, während in anderen Situation eine geringere Druckunterstützung bereitgestellt wird, um bspw. die Komponentenbelastung zu reduzieren. Der definierte hydraulische Druck kann bspw. mittels elektrifizierter Komponenten der hydraulischen Betriebsbremsanlage erzeugt werden. Vorteilhafterweise ist der erzeugte hydraulische Druck des Weiteren unabhängig von einer möglichen Bremspedalbetätigung. Hierunter soll verstanden werden, dass ein mittels einer Bremspedalbetätigung erzeugtes Druckniveau entsprechend berücksichtigt wird und der mittels der elektrifizierten Komponenten erzeugte Druck entsprechend angepasst wird, so dass die sich ergebende hydraulische Kraftkomponente den festgelegten Wert erreicht.

In einer weiteren vorteilhaften Ausgestaltung zeichnet sich das Verfahren dadurch aus, dass in einem zweiten Schritt die elektromechanische Kraftkomponente erzeugt wird, wobei insbesondere der zweite Schritt nach oder zeitgleich mit dem ersten Schritt ausgeführt wird.

Hierdurch wird verdeutlicht, dass die Kraftkomponenten nicht gleichzeitig erzeugt werden müssen. Insbesondere soll dies so verstanden werden, dass die elektromechanische Kraftkomponente frühestens zeitgleich mit der hydraulischen Kraftkomponente erzeugt wird. Aufgrund der unterschiedlichen Dynamiken haben beide Systeme unterschiedliche Aktivierungszeiten bis zum Aufbau, d. h. der tatsächlichen Erzeugung, einer Bremskraft. Hierbei weist die hydraulische Betriebsbremse in der Regel eine höhere Dynamik auf als die elektromechanische Feststellbremse. Aufgrund der Dynamik der Systeme ist bspw. bei einer zeitgleichen Aktivierung der Aktuatoren beider Systeme davon auszugehen, dass die Erzeugung der elektrohydraulischen Kraftkomponente vor der Erzeugung der elektromechanischen Kraftkomponente erfolgt. Da in diesem Fall die elektrohydraulische Kraftkomponente zu einem früheren Zeitpunkt zur Verfügung steht, wird bereits eine erste Klemmkraft erzeugt, wenn auch diese gegenüber der geforderten Gesamtklemmkraft reduziert und nicht für den Feststellbremsvorgang ausreichend ist. Es ist dabei im Rahmen des Vorgehens vorgesehen, diesen Effekt zu nutzen und vorteilhaft eine erste Kraftkomponente für eine Klemmkraft aufzubauen, wenn auch die erforderliche zweite Kraftkomponente bestenfalls zeitgleich aller Wahrscheinlichkeit nach aber erst zu einem späteren Zeitpunkt erzeugt werden kann. Mittels einer zeitlich versetzten Erzeugung der Kraftkomponente kann darüber hinaus ein stufenförmiger Kraftaufbau ermöglicht werden. Hierdurch kann die Komponentenbelastung reduziert werden.

In einer vorteilhaften alternativen Ausgestaltung des Verfahrens ist vorgesehen, dass bei einer Aktivierung des Feststellbremsvorgangs in einem ersten Schritt die hydraulische Betriebsbremse aktiviert wird und in einem zweiten Schritt die automatisierte Feststellbremse aktiviert wird, wobei insbesondere der zweite Schritt nach oder zeitgleich mit dem ersten Schritt ausgeführt wird.

Hierunter ist zu verstehen, dass die Aktivierung der Betriebsbremse vor dem Zeitpunkt der Aktivierung der Feststellbremse erfolgt. Um die Applikationszeit der Feststellbremswirkung zu verkürzen ist vorgesehen, zunächst die Applikation der Feststellbremskraft über hydraulische Mittel zu starten und den hydraulischen Anteil anschließend mit dem elektromechanischen Anteil zu überlagern. Mittels einer zeitlich versetzten Aktivierung der Feststellbremse nach der Aktivierung der Betriebsbremse kann weiterhin ein stufenförmiger Kraftaufbau unterstützt werden. Hierdurch kann die Komponentenbelastung weiter reduziert werden.

In einer vorteilhaften Weiterbildung ist das Verfahren dadurch gekennzeichnet, dass eine Erhöhung der elektromechanischen Kraftkomponente ausgeführt wird bis eine Gesamtklemmkraft erreicht ist.

Hierunter soll verstanden werden, dass in einem ersten Schritt die hydraulische Kraftkomponente erzeugt wird, welche im weiteren Verlauf konstant gehalten wird. Dieser Kraftkomponente wird in einem zweiten Schritt, bspw. im Rahmen einer sogenannten Kraftaufbauphase, eine elektromechanische Kraftkomponente überlagert. Diese elektromechanische Kraftkomponente ist variabel und wird im Verlauf der Kraftaufbauphase erhöht. Die Kraftkomponente wird solange erhöht, bis eine definierte, bzw. geforderte Gesamtklemmkraft erreicht ist. Das heißt der zweite Schritt wird ausgeführt, bis die elektromechanische Kraftkomponente eine Differenz zwischen einer definierten Gesamtklemmkraft und der eingestellten hydraulischen Kraftkomponente abgebaut hat. Dadurch, dass im Verlauf der Kraftaufbauphase eine Kraft (elektrohydraulische Kraftkomponente) konstant gehalten wird, während nur eine weitere Kraft (elektromechanische Kraftkomponente) verändert wird, kann vorteilhafterweise der regelungstechnische Aufwand gering gehalten werden, da nur eine Größe nachzuführen ist.

In einer vorteilhaften Weiterbildung ist vorgesehen, dass eine Ansteuerung von Mitteln zur Erzielung der elektrohydraulischen Kraftkomponente nach Erreichen der Gesamtklemmkraft zurückgenommen wird.

Hierunter ist zu verstehen, dass nach einem Erreichen der erforderlichen Gesamtklemmkraft mittels einer Überlagerung der beiden Bremssysteme, die Mittel zur Erzielung der elektrohydraulischen Kraftkomponente zurückgenommen werden. Hierzu zählen bspw. die Ansteuerung des Aktuators, des iBooster, als auch von hydraulischen Ventilen. Je nach vorliegender Fahrsituation können die Mittel auch direkt im Anschluss für eine anstehende Aufgabe entsprechend der vorliegenden Fahrsituation vorbereitet werden. Die Zurücknahme kann erfolgen, sobald das Erreichen der Gesamtklemmkraft erkannt worden ist. Hierdurch kann ein weiterer Kraftanstieg vermieden werden.

In einer vorteilhaften Weiterbildung ist vorgesehen, dass nach Erreichen der Gesamtklemmkraft eine Ansteuerung von Mitteln zur Erzielung der elektromechanischen Klemmkraft sowie eine Ansteuerung von Mitteln zur Erzielung der elektrohydraulischen Kraftkomponente im Wesentlichen zeitgleich zurückgenommen werden.

Hierunter ist zu verstehen, dass eine Zurücknahme der Ansteuerung, bspw. der Aktuatoren zum selben Zeitpunkt erfolgt. Hierdurch kann vermieden werden, dass eine Überbelastung eines einzelnen Aktuators nach einem Wegfall einer Kraftkomponente auftritt.

Weiterhin ist erfindungsgemäß ein Steuergerät zur Durchführung eines Feststellbremsvorgangs bei einem Kraftfahrzeug mit einer Betriebsbremse und einer Feststellbremse vorgesehen, welches ausgestaltet ist und Mittel aufweist, ein Verfahren nach einem der vorgenannten Ansprüchen durchzuführen.

Hierunter ist zu verstehen, dass das Steuergerät ausgebildet, das heißt eingerichtet, ist und Mittel aufweist das beschriebene Verfahren durchzuführen.

Weiterhin ist erfindungsgemäß eine automatisierte Feststellbremse für ein Kraftfahrzeug mit einer hydraulischen Betriebsbremse vorgesehen, wobei die Feststellbremse ausgestaltet ist und Mittel aufweist, ein Verfahren nach einem der vorgenannten Ansprüchen durchzuführen. In einer vorteilhaften Ausgestaltung ist vorgesehen, dass die Feststellbremse als "Motor on Caliper"-Konzept ausgeführt ist.

Dabei erfolgt die Auslegung der Feststellbremse bewusst in der Art, dass der elektromechanische Anteil bezüglich ihrer bereitstellbaren Klemmkraft zwischen 40 und 60% der Gesamtklemmkraft bekannten elektromechanischen Systemen darstellt. D.h. bekannte Systeme sind in der Regel so ausgelegt, dass diese unter nominellen (12V, Raumtemperatur) Bedingungen die Klemmkraft bereitstellen können (ungefährer Kraftwert ca. 18 kN), die ausreichend ist das Fahrzeug bis an 30% Steigung abzustellen. Üblicherweise sind bei bekannten Feststellbremssystemen für Steigungen von bis zu 20% (gesetzliche Forderung) geringere Klemmkräfte ausreichend (ungefährer Kraftwert ca. 8,5 kN bis 10 kN). Durch die Reduktion der notwendigen bereitzustellenden elektromechanischen Klemmkraft können der elektromechanische als auch der elektrische Teil der Feststellbremsanlage kleiner, leichter und damit auch kostengünstiger ausgeführt werden. Eine vorteilhafte Ausgestaltung der Feststellbremse sieht daher eine Auslegung auf eine Kraft von etwa 8,5 kN bis 10 kN vor. Durch eine derartige Auslegung können Systeme definiert werden, die bereits eine erhebliche Kostenreduktion im Vergleich mit bekannten Systemen darstellen. Das Verriegeln selbst (das Halten der Verriegelungskraft) ist unverändert, da sich der Bremskolben auch weiterhin auf dem Mutter-Spindel-System abstützt. Um sowohl mögliche Toleranzen der Kraftbereitstellung (einschließlich Varianz der Reibwertes der Bremsbeläge) als auch (thermische) Setzeffekte hinreichend zu berücksichtigen wird ca. 3 kN bis 4 kN stärker zugespannt, als rechnerisch bzw. physikalisch notwendig wäre. Da der elektromechanische Steller, wie oben beschrieben, aufgrund der Auslegung nicht ausreichend ist, die Klemmkraft von z.B. 13 kN alleine bereitzustellen wird bei jeder Aktuierung (Feststellbremskraftaufbau) der elektromechanische Steller hydraulisch unterstützt. D.h. die Klemmkraftbereitstellung erfolgt generell im Sinne einer Superposition aus elektromechanischer und elektrohydraulischer Klemmkraft.

In einer alternativen vorteilhaften Auslegung der Feststellbremse ist vorgesehen, dass der elektromechanische Anteil zwischen 20 und 40% der bereitstellbaren Klemmkraft darstellt. Die restliche Klemmkraft wird insbesondere durch den im Fahrzeug vorhandene hydraulischen Aktuator bereitgestellt. Durch eine derartige Auslegung können Systeme definiert werden, die ledigliche eine minimale Dimensionierung des elektromechanischen Stellers vorsehen. Hierdurch kann - bei Verwendung der bereits vorhandenen hydraulischen Druckbereitsstellungeine weitere Kostenreduktion ermöglicht werden. Der elektromechanische Steller ist hierbei so ausgelegt, dass er das Fahrzeug gemäß gesetzlichen Forderungen verzögert. Die Verzögerung erfolgt jedoch in der Regel mittels hydraulischer Druckbereitstellung. Nur im Falle einer nicht verfügbaren oder nicht ausreichend verfügbaren Druckbereitstellung kann der elektromechanische Steller die Druckbereitstellung übernehmen.

Weitere Merkmale und Zweckmäßigkeit der Erfindung ergeben sich aus der Beschreibung von Ausführungsbeispielen anhand der beigefügten Figuren.
Fig. 1 als Stand der Technik eine schematische Schnittansicht einer Bremsvorrichtung mit einer automatischen Feststellbremse in "motor on caliper" Bauweise;
Fig. 2 ein Ablaufdiagramm des erfindungsgemäßen Vorgehens; und
Fig. 3 eine schematische Darstellung des Kräfteverlaufs während und nach der Zuspannphase eines erfindungsgemäßen Feststellbremsprozesses.

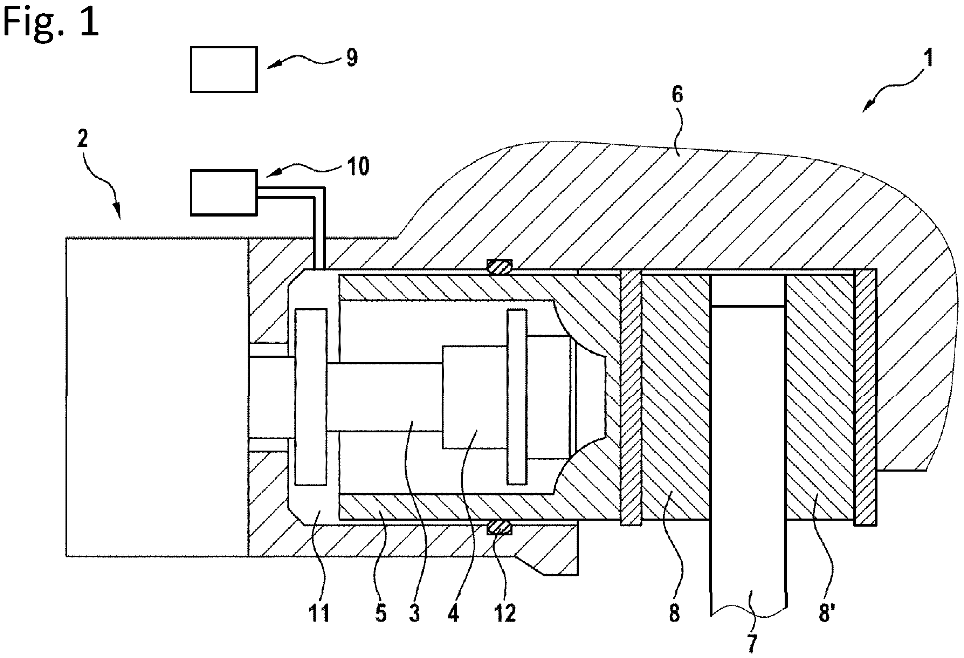

Fig. 1 zeigt gemäß dem Stand der Technik eine schematische Schnittansicht einer Bremsvorrichtung 1 für ein Fahrzeug. Die Bremsvorrichtung 1 weist dabei eine automatisierte (automatische) Feststellbremse (Parkbremse) auf, die mittels eines Aktuators 2 (Bremsmotor), eine Klemmkraft zum Festsetzen des Fahrzeugs ausüben kann. Der Aktuator 2 der Feststellbremse treibt hierfür eine in einer axialen Richtung gelagerte Spindel 3, insbesondere eine Gewindespindel 3, an. An ihrem dem Aktuator 2 abgewandten Ende ist die Spindel 3 mit einer Spindelmutter 4 versehen, die im zugespannten Zustand der automatisierten Feststellbremse an dem Bremskolbens 5 anliegt. Die Feststellbremse übertragt auf diese Weise elektromechanisch eine Kraft auf die Bremsbeläge 8, 8', bzw. die Bremsscheibe 7. Die Spindelmutter liegt dabei an einer inneren Stirnseite des Bremskolbens 5 (auch Rückseite des Bremskolbenbodens oder innerer Kolbenboden genannt) an. Die Spindelmutter 4 wird bei einer Drehbewegung des Aktuators 2 und einer resultierenden Drehbewegung der Spindel 3 in der axialen Richtung verschoben. Die Spindelmutter 4 und der Bremskolben 5 sind in einem Bremssattel 6 gelagert, der eine Bremsscheibe 7 zangenartig übergreift.

Zu beiden Seiten der Bremsscheibe 7 ist jeweils ein Bremsbelag 8, 8' angeordnet. Im Fall eines Zuspannvorgangs der Bremsvorrichtung 1 mittels der automatisierten Feststellbremse dreht sich der Elektromotor (Aktuator 2), woraufhin die Spindelmutter 4 sowie der Bremskolben 5 in der axialen Richtung auf die Bremsscheibe 7 zubewegt werden, um so eine vorbestimmte Klemmkraft zwischen den Bremsbelägen 8, 8' und der Bremsscheibe 7 zu erzeugen. Aufgrund des Spindelantriebs und der damit verbundenen Selbsthemmung wird eine bei der Feststellbremse mittels einer Ansteuerung des Elektromotors erzeugte Kraft auch bei einer Beendigung der Ansteuerung weiter gehalten.

Die automatisierte Feststellbremse ist bspw. wie abgebildet als "motor on caliper" System ausgebildet und mit der Betriebsbremse kombiniert. Man könnte diese auch als in das System der Betriebsbremse integriert ansehen. Sowohl die automatisierte Feststellbremse als auch die Betriebsbremse greifen dabei auf denselben Bremskolben 5 sowie denselben Bremssattel 6 zu, um eine Bremskraft auf die Bremsscheibe 7 aufzubauen. Die Betriebsbremse besitzt jedoch einen separaten Aktuator 10. Die Betriebsbremse ist in Fig. 1 als hydraulisches System ausgestaltet, wobei der Aktuator 10 durch die ESP-Pumpe oder einen sogenannten iBooster dargestellt werden kann. Bei einer Betriebsbremsung wird eine vorbestimmte Klemmkraft zwischen den Bremsbelägen 8, 8' und der Bremsscheibe 7 hydraulisch aufgebaut. Zum Aufbau einer Bremskraft mittels der hydraulischen Betriebsbremse wird ein Medium 11, insbesondere eine im Wesentlich inkompressible Bremsflüssigkeit 11, in einen durch den Bremskolben 5 und den Bremssattel 6 begrenzten Fluidraum gepresst. Der Bremskolben 5 ist gegenüber der Umgebung mittels eines Kolbendichtring 12 abgedichtet.

Die Ansteuerung der Bremsaktuatoren 2 und 10 erfolgt mittels einer Endstufe, d.h. mittels eines Steuergeräts 9, bei dem es sich bspw. um ein Steuergerät eines Fahrdynamiksystems, wie ESP (elektronisches Stabilitätsprogramm) oder ein sonstiges Steuergerät handeln kann.

Bei einer Ansteuerung der automatisierten Feststellbremse müssen zuerst der Leerweg bzw. das Lüftspiel überwunden werden, bevor eine Bremskraft aufgebaut werden kann. Als Leerweg wird bspw. der Abstand bezeichnet, den die Spindelmutter 4 durch die Rotation der Spindel 3 überwinden muss, um in Kontakt mit dem Bremskolben 5 zu gelangen. Als Lüftspiel wird der Abstand zwischen den Bremsbelägen 8, 8' und der Bremsscheibe 7 bei Scheibenbremsanlagen von Kraftfahrzeugen bezeichnet. Dieser Vorgang dauert in Bezug auf die Gesamtansteuerung, insbesondere bei der automatisierten Feststellbremse, in der Regel relativ lang. Am Ende einer derartigen Vorbereitungsphase sind die Bremsbeläge 8, 8' an die Bremsscheibe 7 angelegt und der Kraftaufbau beginnt bei einer weiteren Ansteuerung. Beim Anlegen der Bremsbeläge 8, 8' ist es daher im Sinne dieser Erfindung wichtig keine Bremskraft aufzuprägen, bzw. die bei einem Anlegen aufgeprägte Bremskraft so gering wie möglich einzustellen, um keinen ungewünschten verfrühten Bremseffekt zu produzieren. Fig. 1 zeigt den Zustand des bereits überwundenen Leerwegs und Lüftspiels. Hierbei sind die Bremsbeläge 8, 8' an die Bremsscheibe 7 angelegt und sämtliche Bremsen, d.h. die Feststellbremse als auch die Betriebsbremse, können bei einer folgenden Ansteuerung sofort eine Bremskraft an dem entsprechenden Rad aufbauen. Die Beschreibungen zu Leerweg, bzw. Lüftspiel gelten in analoger Weise auch für die Betriebsbremse, wobei jedoch aufgrund der hohen Druckaufbaudynamik die Überwindung eines Leerwegs einen geringeren Zeitaufwand darstellt als bei der Feststellbremse.

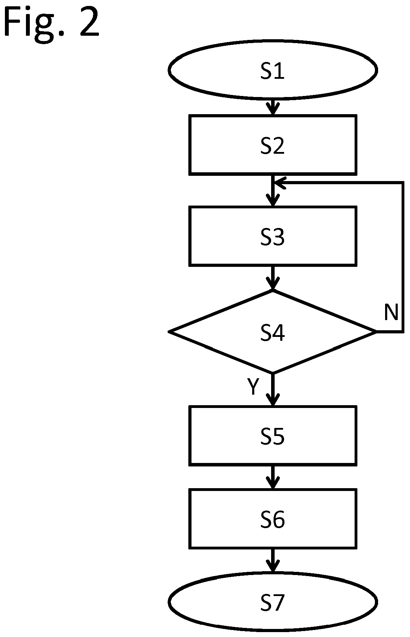

Fig. 2 zeigt ein Ablaufdiagramm einer möglichen Ausgestaltungsform des erfindungsgemäßen Vorgehens. S1 bezeichnet den Startpunkt des Verfahrens.

Das Vorgehen wird bspw. gestartet, wenn eine Feststellbremsanforderung, bspw. eine Parksituation erkannt wird. Nach Erkennung der Parksituation wird in dem Schritt S2 eine Druckbereitstellung mittels der hydraulischen Betriebsbremse aktiviert. Bei der Druckbereitstellung wird ein definierter Hydraulikdruck erzeugt und in das Bremssystem eingesteuert. Dieser beträgt bspw. 40 bar. Aufgrund des bereitgestellten hydraulischen Drucks kann das Fahrzeug zunächst hydraulisch, wenn auch nur mit geringerer Kraft, gehalten werden. Die Druckbereitstellung kann mittels elektrifizierter Komponenten des hydraulischen Betriebsbremsanlage, bspw. mittels eines elektrifizierten Druckkraftverstärkers, eines sogenannten iBoosters, erfolgen. Bei einer Verwendung derartiger Komponenten kann die Druckbereitstellung relativ schnell erfolgen, da keine Flüssigkeit (wie bspw. bei einer klassischen ESP-Pumpe) angesaugt werden muss. Die Druckbereitstellung erfolgt mittels eines iBoosters rein durch eine Verschiebung des Fluidvolumens. In einem nächsten Schritt S3 wird der elektromechanische Aktuator angesteuert. Dieser muss zunächst den vorliegenden Leerweg in bekannter Weise überwinden. Sobald die Spindelmutter auf den Spindelboden auftritt erfolgt jedoch ein steiler Kraftanstieg, da das Bremssystem bereits vorgespannt ist. Ab diesem Zeitpunkt wirken die elektrohydraulische als auch die elektromechanische Kraft zusammen. Mittels Überlagerung der beiden Kraftkomponenten ergibt sich eine Gesamtkraft, welche eine Klemmkraft im Bremssystem erzeugt. Die aufgebaute Kraft, bzw. Gesamtklemmkraft, wird in einem weiteren Schritt S4 überprüft, ob diese einer definierten, geforderten Kraft entspricht. Falls dies nicht der Fall ist (N), wird mittels des elektromechanischen Aktuators erzeugte Kraftkomponente erhöht. Wird erkannt, dass die geforderte Kraft erreicht ist (Y), wird der elektromechanische Aktuator in einem nächsten Schritt S5 abgeschalten. Ebenfalls erfolgt eine Abschaltung des elektrohydraulischen Aktuators in einem Schritt S6. Hierbei können die beiden Schritte S5 und S6 auch gleichzeitig ausgeführt werden, das heißt die Abschaltung der Aktuatoren kann gleichzeitig erfolgen. Der abschließende Schritt 7 zeigt das Ende des Verfahrens an.

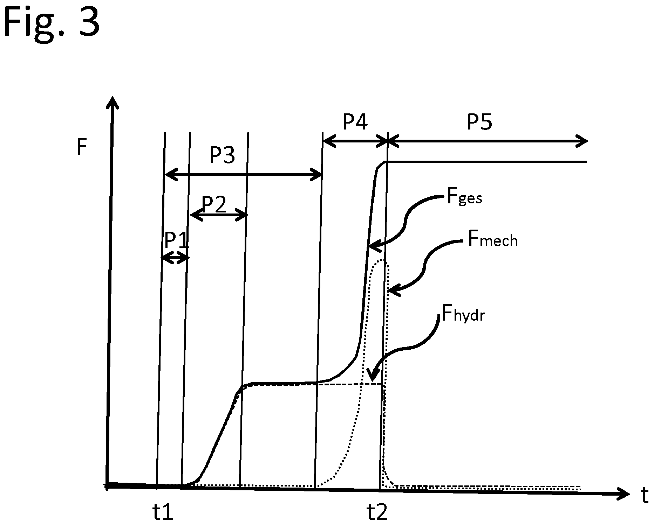

Fig. 3 zeigt eine schematische Darstellung des Kräfteverlaufs F während und nach einem erfindungsgemäßen Zuspannprozess. Während Fig. 2 eine prozessuale Darstellung des Vorgehens liefert, verdeutlicht Fig. 3 dasselbe Verfahren über einer zeitlichen Perspektive t. Das Verfahren startet zu dem Zeitpunkt t1. Zunächst erfolgt der Aufbau eines definierten hydraulischen Druckwertes. Hierfür wird ein Aktuator der Betriebsbremsanlage angesteuert. Hierbei handelt es sich bspw. um den iBooster. In der Phase P1 werden der Leerweg und das Lüftspiel der Betriebsbremse überwunden. In einer Phase P2 erfolgt die Erzeugung der elektrohydraulischen Kraftkomponente Fhydr. Hierfür wird ein definierter Druckwert erzeugt. Sobald der Druckwert erzeugt worden ist, muss dieser im weiteren Verlauf nur noch gehalten werden. Im vorliegenden Beispiel wird zeitgleich mit der Ansteuerung des Aktuators der Betriebsbremsanlage auch der Aktuator der Feststellbremsanlage angesteuert. Die Überwindung des Leerwegs der Feststellbremse erfolgt in der Phase P3. Nach der Überwindung des Leerwegs der Feststellbremse, das heißt wenn die Spindelmutter am Bremskolben anliegt, erfolgt bei einer weiteren Auslenkung der Spindelmutter ein steiler Kraftanstieg, da das Bremssystem mittels der hydraulischen Betriebsbremse bereits vorgespannt ist. In dieser Phase P4 erfolgt die eigentliche Superposition der Feststellbremse und der Betriebsbremse. Durch eine Ansteuerung der Feststellbremse wird die elektromechanische Kraftkomponente Fmech erzeugt. Diese wird der vorliegenden elektrohydraulischen Kraftkomponente Fhydr überlagert und erhöht die erzielte Gesamtklemmkraft Fges. Die Ansteuerung des Aktuators der Feststellbremse erfolgt solange bis die geforderte Gesamtklemmkraft Fges erreicht ist. Durch die Ansteuerung der Feststellbremse ergibt sich durch die Verschiebung des Bremskolbens eine Vergrößerung des Fluidvolumens zwischen Bremssattel und Bremskolben. Aufgrund dieser Fluidvolumenvergrößerung muss gegebenenfalls der hydraulische Druck mittels der Betriebsbremse nachgeführt werden. Dies kann zielgerichtet mittels einem iBooster System erfolgen, welches mit entsprechender Kraftsensorik und Mittel zur Drucküberwachung ausgestattet ist. Bei einem Erreichen der geforderten Gesamtklemmkraft Fges erfolgt eine Zurücknahme der Ansteuerung, das heißt es erfolgt eine Abschaltung der elektromechanischen und elektrohydraulischen Aktuatoren zu dem Zeitpunkt t2. Hierdurch wird ein weiterer Kraftaufbau vermieden. Durch die Abschaltung der Aktuatoren erfolgt ebenfalls eine Rücknahme der elektromechanischen Kraftkomponente Fmech sowie der elektrohydraulischen Kraftkomponente Fhydr. Die aufgebaute Gesamtklemmkraft Fges wird jedoch, auch nach einem Beenden des Zuspannvorgangs, aufrecht erhalten, da die beispielhafte Feststellbremse wie beschrieben mit einer Selbsthemmung versehen ist, wie dies in Phase P5 dargestellt ist. Nur ein aktives Ansteuern der Feststellbremse in umgekehrte Richtung führt zu einem Lösen der Feststellbremse, was jedoch nicht in Fig. 3 dargestellt ist.

## Patentansprüche

1. Verfahren zur Durchführung eines Feststellbremsvorgangs bei einem Kraftfahrzeug mit einer Betriebsbremse und einer automatisierten Feststellbremse, wobei eine hydraulische Kraftkomponente und eine elektromechanische Kraftkomponente zur Erzielung einer Gesamtklemmkraft für den Feststellbremsvorgang überlagert werden, **dadurch gekennzeichnet, dass** die Überlagerung der beiden Kraftkomponenten zur Erzielung der Gesamtklemmkraft im Superpositionsbetrieb bei jedem Feststellbremsvorgang erfolgt, wobei die elektromechanischen Kraftkomponente frühestens zeitgleich mit der hydraulischen Kraftkomponente erzeugt wird.

2. Verfahren nach Anspruch 1, **dadurch gekennzeichnet, dass** eine elektromechanische Kraftkomponente mittels einer automatisierten Feststellbremse und eine elektrohydraulische Kraftkomponente mittels der hydraulischen Betriebsbremse erzeugt wird, wobei die Erzeugung und die Überlagerung der beiden Kraftkomponenten bei jedem Feststellbremsvorgang erfolgt.

3. Verfahren nach Anspruch 1, **dadurch gekennzeichnet, dass** der Feststellbremsvorgang wenigstens eine Kraftaufbauphase (P4) enthält, wobei im Wesentlichen während der gesamten Kraftaufbauphase (P4) die Überlagerung der Kraftkomponenten erfolgt.

4. Verfahren nach Anspruch 2, **dadurch gekennzeichnet, dass** bei einer Aktivierung des Feststellbremsvorgangs in einem ersten Schritt die elektrohydraulische Kraftkomponente erzeugt wird.

5. Verfahren nach Anspruch 1, **dadurch gekennzeichnet, dass** bei dem Feststellbremsvorgangs ein definierter hydraulischer Druck erzeugt wird.

6. Verfahren nach Anspruch 4, **dadurch gekennzeichnet, dass** in einem zweiten Schritt die elektromechanische Kraftkomponente erzeugt wird, wobei insbesondere der zweite Schritt nach oder zeitgleich mit dem ersten Schritt ausgeführt wird.

7. Verfahren nach Anspruch 2, **dadurch gekennzeichnet, dass** bei einer Aktivierung des Feststellbremsvorgangs in einem ersten Schritt die hydraulische Betriebsbremse aktiviert wird und in einem zweiten Schritt die automatisierte Feststellbremse aktiviert wird, wobei insbesondere der zweite Schritt nach oder zeitgleich mit dem ersten Schritt ausgeführt wird.

8. Verfahren nach Anspruch 2, **dadurch gekennzeichnet, dass** eine Erhöhung der elektromechanischen Kraftkomponente ausgeführt wird bis die Gesamtklemmkraft erreicht ist.

9. Verfahren nach Anspruch 8, **dadurch gekennzeichnet, dass** eine Ansteuerung von Mitteln zur Erzielung der elektrohydraulischen Kraftkomponente nach Erreichen der Gesamtklemmkraft zurückgenommen wird.

10. Verfahren nach Anspruch 8, **dadurch gekennzeichnet, dass** nach Erreichen der Gesamtklemmkraft eine Ansteuerung von Mitteln zur Erzielung der elektromechanischen Klemmkraft sowie eine Ansteuerung von Mitteln zur Erzielung der elektrohydraulischen Kraftkomponente im Wesentlichen zeitgleich zurückgenommen werden.

11. Steuergerät (9) zur Durchführung eines Feststellbremsvorgangs bei einem Kraftfahrzeug mit einer Betriebsbremse und einer automatisierten Feststellbremse, wobei das Steuergerät ausgestaltet ist und Mittel aufweist, ein Verfahren nach einem der vorgenannten Ansprüchen durchzuführen.

12. Automatisierte Feststellbremse für ein Kraftfahrzeug mit einer hydraulischen Betriebsbremse, wobei die Feststellbremse ausgestaltet ist und Mittel aufweist, ein Verfahren nach einem der vorgenannten Ansprüchen durchzuführen.

## Claims

1. Method for carrying out a parking brake process in a motor vehicle with a service brake and an automated parking brake, wherein a hydraulic force component and an electromechanical mechanical force component are superposed to achieve a total clamping force for the parking brake process, **characterized in that** the superposition of the two force components to achieve the total clamping force in superposition operation is carried out for every parking brake process, wherein the electromechanical force component is generated at the earliest simultaneously with the hydraulic force component.

2. Method according to Claim 1, **characterized in that** an electromechanical force component is generated by means of an automated parking brake and an electrohydraulic force component is generated by means of the hydraulic service brake, wherein the generation and the superposition of the two force components is carried out for every parking brake process.

3. Method according to Claim 1, **characterized in that** the parking brake process includes at least one force build-up phase (P4), wherein the superposition of the force components is carried out substantially during the entire force build-up phase (P4).

4. Method according to Claim 2, **characterized in that,** upon an activation of the parking brake process, the electrohydraulic force component is generated in a first step.

5. Method according to Claim 1, **characterized in that** a defined hydraulic pressure is generated during the parking brake process.

6. Method according to Claim 4, **characterized in that** the electromechanical force component is generated in a second step, wherein in particular the second step is carried out after or simultaneously with the first step.

7. Method according to Claim 2, **characterized in that,** upon an activation of the parking brake process, the hydraulic service brake is activated in a first step and the automated service brake is activated in a second step, wherein in particular the second step is carried out after or simultaneously with the first step.

8. Method according to Claim 2, **characterized in that** an increase in the electromechanical force component is carried out until the total clamping force is reached.

9. Method according to Claim 8, **characterized in that** an actuation of means to achieve the electrohydraulic force component is withdrawn after the total clamping force is reached.

10. Method according to Claim 8, **characterized in that,** after the total clamping force is reached, an actuation of means to achieve the electromechanical clamping force and an actuation of means to achieve the electrohydraulic force component are withdrawn substantially simultaneously.

11. Control unit (9) for carrying out a parking brake process in a motor vehicle with a service brake and an automated parking brake, wherein the control unit is designed, and comprises means, to carry out a method according to any one of the aforementioned claims.

12. Automated parking brake for a motor vehicle with a hydraulic service brake, wherein the parking brake is designed, and comprises means, to carry out a method according to any one of the aforementioned claims.

## Revendications

1. Procédé permettant d'effectuer une opération de freinage de stationnement sur un véhicule automobile doté d'un frein de service et d'un frein de stationnement automatisé, une composante de force hydraulique et une composante de force électromécanique étant superposées pour obtenir une force de serrage totale pour l'opération de freinage de stationnement,
**caractérisé en ce que** la superposition des deux composantes de force est effectuée pour obtenir la force de serrage totale en fonctionnement de superposition à chaque opération de freinage de stationnement, la composante de force électromécanique étant générée au plus tôt en même temps que la composante de force hydraulique.

2. Procédé selon la revendication 1, **caractérisé en ce qu'**une composante de force électromécanique est générée au moyen d'un frein de stationnement automatisé et une composante de force électrohydraulique est générée au moyen du frein de service hydraulique, la génération et la superposition des deux composantes de force étant effectuées à chaque opération de freinage de stationnement.

3. Procédé selon la revendication 1, **caractérisé en ce que** l'opération de freinage de stationnement contient au moins une phase d'établissement de force (P4), la superposition des composantes de force étant effectuée substantiellement pendant toute la phase d'établissement de force (P4).

4. Procédé selon la revendication 2, **caractérisé en ce que** lors d'une activation de l'opération de freinage de stationnement, la composante de force électrohydraulique est générée dans une première étape.

5. Procédé selon la revendication 1, **caractérisé en ce qu'**une pression hydraulique définie est générée lors de l'opération de freinage de stationnement.

6. Procédé selon la revendication 4, **caractérisé en ce que** dans une deuxième étape, la composante de force électromécanique est générée, la deuxième étape étant effectuée en particulier après ou en même temps que la première étape.

7. Procédé selon la revendication 2, **caractérisé en ce que** lors d'une activation de l'opération de freinage de stationnement, le frein de service hydraulique est activé dans une première étape, et le frein de stationnement automatisé est activé dans une deuxième étape, la deuxième étape étant effectuée en particulier après ou en même temps que la première étape.

8. Procédé selon la revendication 2, **caractérisé en ce qu'**une augmentation de la composante de force électromécanique est effectuée jusqu'à ce que la force de serrage totale soit atteinte.

9. Procédé selon la revendication 8, **caractérisé en ce qu'**un pilotage de moyens permettant d'obtenir la composante de force électrohydraulique est annulé lorsque la force de serrage totale a été atteinte.

10. Procédé selon la revendication 8, **caractérisé en ce que** lorsque la force de serrage totale a été atteinte, un pilotage de moyens permettant d'obtenir la force de serrage électromécanique ainsi qu'un pilotage de moyens permettant d'obtenir la composante de force électrohydraulique sont annulés substantiellement en même temps.

11. Appareil de commande (9) permettant d'effectuer une opération de freinage de stationnement sur un véhicule automobile doté d'un frein de service et d'un frein de stationnement automatisé, l'appareil de commande étant configuré et présentant des moyens pour effectuer un procédé selon l'une quelconque des revendications précédentes.

12. Frein de stationnement automatisé pour un véhicule automobile doté d'un frein de service hydraulique, le frein de stationnement étant configuré et présentant des moyens pour effectuer un procédé selon l'une quelconque des revendications précédentes.
